# EUROPEAN PATENT SPECIFICATION

(11) **EP 1 931 118 B1**
(45) Date of publication and mention of the grant of the patent: **11.10.2017**
(21) Application number: 07254676.5
(22) Date of filing: 03.12.2007
(51) Int. Cl.: H04M 1/02

(54) **PORTABLE DEVICE CONSISTING OF THREE MOVABLE HOUSING PARTS**
TRAGBARE VORRICHTUNG BESTEHEND AUS DREI BEWEGLICHEN GEHÄUSETEILEN
DISPOSITIF PORTABLE COMPORTANT TROIS PARTIES MOBILES DE BOÎTIERS

(30) Priority: 04.12.2006 JP 2006327446
(43) Date of publication of application: 11.06.2008
(73) Proprietor: FUJIFILM Corporation, Minato-ku Tokyo 106-8620 (JP)
(72) Inventor: Misawa, Atsushi c/o Fujifilm Corporation, Asaka-shi Saitama (JP)
(74) Representative: Jeffrey, Philip Michael

(56) References cited:
- EP-A- 1 594 289
- US-A1- 2005 091 431
- US-A1- 2006 061 552
- US-A1- 2006 226 150

## Description

### BACKGROUND OF THE INVENTION

### Field of the invention

The present invention relates to portable device such as a cellular phone, and particularly to portable device including a slide mechanism.

### Description of the Related Art

As portable device, a folding type of portable device in which two enclosures that are an enclosure having a display device and an enclosure having an operation part are linked to be openable and closable via a hinge, and a slide type of portable device in which two enclosures are linked to be openable and closable via a slide mechanism are known. Such portable device can be brought into a compact stored state convenient to carry by overlaying the enclosure having a display device and the enclosure having an operation part on each other.

Portable devices in which parts can be slid relative to each other into a variety of configurations are disclosed in EP 1594289, US 2006/0226150 and US 2006/0061552. A similar device, in which parts can be slid or twisted relative to each other, is disclosed on US 2005/0091431.

In such storable portable device, there is the one equipped with a television receiving function. Generally, a display device of storable portable device is in a vertically-oriented shape, but there may be a case in which the display device is desired to be horizontally-oriented to enhance visibility for information displayed in a horizontal orientation such as a television image.

In order to solve this, Japanese Patent Application Laid-Open No. 2001-156893 proposes communication device in which a display unit portion is made rotatable, display can be made vertically-oriented or horizontally-oriented with respect to an operation part enclosure, and the display of the display part is switched to be vertically-oriented and horizontally-oriented with the rotation of the display unit portion.

Japanese Patent Application Laid-Open No. 2005-38217 proposes portable device in which a main body part and a flip part are deformable in various forms by jointing the main body part and the flip part to each other to be rotatable by using a hinge having three axes of rotation.

In such storable portable device, only one kind of operation part is generally used, but it is sometimes efficient to use another operation part in accordance with the functions to be used such as a call function and a television function.

In order to solve this, Japanese Patent Application Laid-Open No. 2002-330198 proposes a cellular phone in which different operation parts appear in correspondence with opening and closing a flip.

### SUMMARY OF THE INVENTION

However, the portable device disclosed in the above described Patent Documents has the following disadvantage. Specifically, the communication device disclosed in Japanese Patent Application Laid-Open No. 2001-156893 has the problem that a plurality of operations are required and the operations are complicated when the device is switched into a state in which the display device is used in a horizontal orientation from a state in which it is stored with two enclosures folded.

The portable device disclosed in Japanese Patent Application Laid-Open No. 2005-38217 has the problem of having necessity of using an expensive and complicated mechanism called a hinge having a plurality of axes, and also has the problem that when the display device is made horizontally-oriented, the operation portion and the letters on the enclosure are also horizontally-oriented at the same time when the display device is horizontally oriented, and therefore, it becomes difficult to operate. It also has the problem of confusion since the appearance is the same.

The cellular phone disclosed in Japanese Patent Application Laid-Open No. 2002-330198 has the problem that a display device cannot be provided at an entire enclosure, and the display device becomes small.

The present invention is made in view of the above circumstances, and has its object to provide portable device which can easily (by one action) bring the display device into a use state from a stored state when a display device is used In a vertical orientation or the display device is used in a horizontal orientation, and can make an exclusive operation part usable in each use state, can hide an unnecessary operation part to enhance operability, or can show an exclusive appearance on a surface.

In order to attain the above-described object, the invention provides a portable device, comprising: a first enclosure including a first operation part; a second enclosure including a display part; a third enclosure; and a joint mechanism which joints the first enclosure, the second enclosure and the third enclosure respectively, and joints the second enclosure movably with respect to the first enclosure from a first position in which a silhouette of the second enclosure is overlaid on the first enclosure to a second position and a third position differing from each other, wherein, in the first position, the joint mechanism integrally joints the second enclosure so as to be overlaid on silhouettes of the first enclosure and the third enclosure, and wherein, when the second enclosure is moved to the second position from the first position, the joint mechanism causes the third enclosure to be exposed by restricting a moving amount of the third enclosure accompanying the movement of the second enclosure to zero or to be smaller than a moving amount of the second enclosure, and wherein, when the second enclosure is moved to the third position from the first position, the joint mechanism causes the first operation part to be exposed in an operable state by restricting the moving amount of the third enclosure accompanying the movement of the second enclosure to be the same as that of the second enclosure or to be smaller than the moving amount of the second enclosure, characterized in that the joint mechanism is so constituted that either the movement of the second enclosure to the second position relative to the first enclosure or the movement of the second enclosure to the third position relative to the first enclosure is a parallel movement, and the other movement of the second enclosure relative to the first enclosure is a rotational movement, and in that the joint mechanism comprises: a key in a rectangular parallelepipedal shape, which is disposed on the first enclosure; a round hole for rotation in which the key can rotate and which is disposed on the third enclosure; a keyhole-shaped slit which is formed on a bottom surface of the second enclosure, and formed into a shape composed of a round hole portion in which the key can rotate and a long hole portion having a width smaller than a longer side of the key, the key being slideable in the long hole portion; and a slipping-off prevention cap which is disposed on the first enclosure and fitted and fixed to the key on the first enclosure through the round hole and the keyhole-shaped slit.

As a result, by hiding an unnecessary operation part in each use state, operability is enhanced and the exclusive appearance can be shown on the surface. Further, only the necessary operation parts are exposed in the first position, the second position and the third position, and therefore, operability can be enhanced.

### BRIEF DESCRIPTION OF THE DRAWINGS

Figs. 1A to 1C are perspective views of portable device 1 of an embodiment according to the present invention seen from a front;
Figs. 2A to 2C are perspective views of the portable device 1 seen from a rear side;
Fig. 3 is a system block diagram of the portable device 1;
Fig. 4 is an exploded perspective view of the portable device 1;
Figs. 5A to 5D are views of the respective enclosures of the portable device 1 seen from a top side;
Figs. 6A to 6C are views of the transition of slide movement of the portable device 1 to the second position from the first position seen from the top side;
Figs. 7A to 7C are sectional views in the lines a to a' of Figs. 6A to 6C;
Figs. 8A to 8C are views of the transition of rotational movement of the portable device 1 to the third position from the first position seen from the top side;
Figs. 9A to 9C are sectional views in the lines b to b' of Figs. 8A to 8C;
Fig. 10 is a table showing states of ON and OFF of the first detection switch 16 and the second detection switch 34 in each of the positions;
Fig. 11 is a flowchart showing an operation state of the portable device 1;
Fig. 12 is an exploded perspective view of a third enclosure 30;
Fig. 13 is an exploded perspective view of the third enclosure 30; and
Fig. 14 is a sectional view of a second operation part 31 and a first operation part 11.

### DETAILED DESCRIPTION OF THE PREFERRED EMBODIMENT

Hereinafter, a preferred embodiment of portable device according to the present invention will be described with reference to the attached drawings.

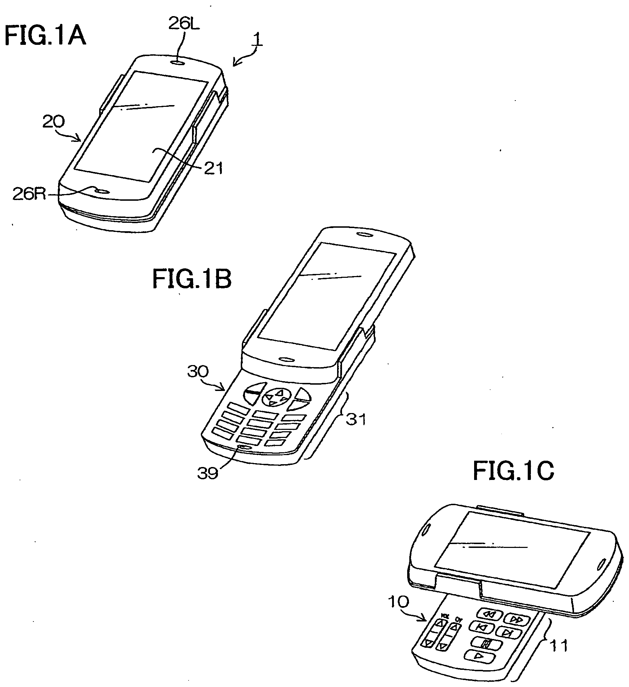

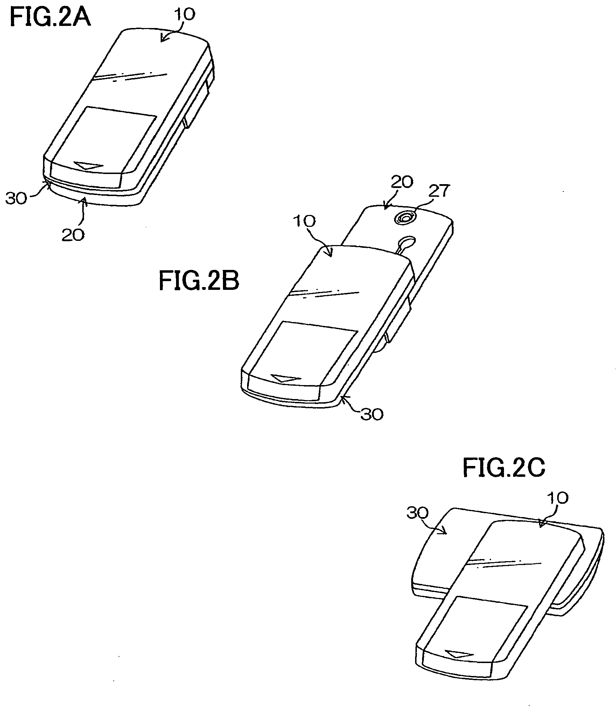

Figs. 1A to 1C are perspective views of portable device 1 of an embodiment according to the present invention seen from a front. Fig. 1A shows a first position that is a stored state, Fig. 1B shows a second position that is a state in which a display device is used in a vertical orientation. Fig. 1C shows a third position that is a state in which the display device is used in a horizontal orientation. Figs. 2A to 2C are perspective views of the portable device 1 seen from a rear. Fig. 2A shows a first position. Fig. 2B shows a second position. Fig. 2C shows a third position.

The portable device 1 is portable device of which operation member is capable of being slid and stored such as a cellular phone, for example, and is constituted of a first enclosure 10, a second enclosure 20 and a third enclosure 30.

As shown in Fig. 1C, the first enclosure 10 is in a substantially rectangular parallelepiped shape, where a first operation part 11 constituted of a television operation button, a moving image reproduction button, a sound volume button and the like is placed. As shown in Fig. 1A, the second enclosure 20 is also in a substantially rectangular parallelepiped shape as the first enclosure 10, where a rectangular display 21 for displaying information such as an image, with a longitudinal direction aligned with a longitudinal direction of the enclosure, and speakers 26R and 26L outputting sound are placed, and an image-taking lens 27 located on a back side of the enclosure as shown in Fig. 2B is placed. As shown in Fig. 1B, the third enclosure 30 is in a substantially rectangular parallelepiped shape as the first enclosure 10, and in the third enclosure 30, a second operation part 31 constituted of a call button, a clearing button, a ten key, a shutter button and the like, and a microphone 39 which inputs voice at the time of telephone call are placed.

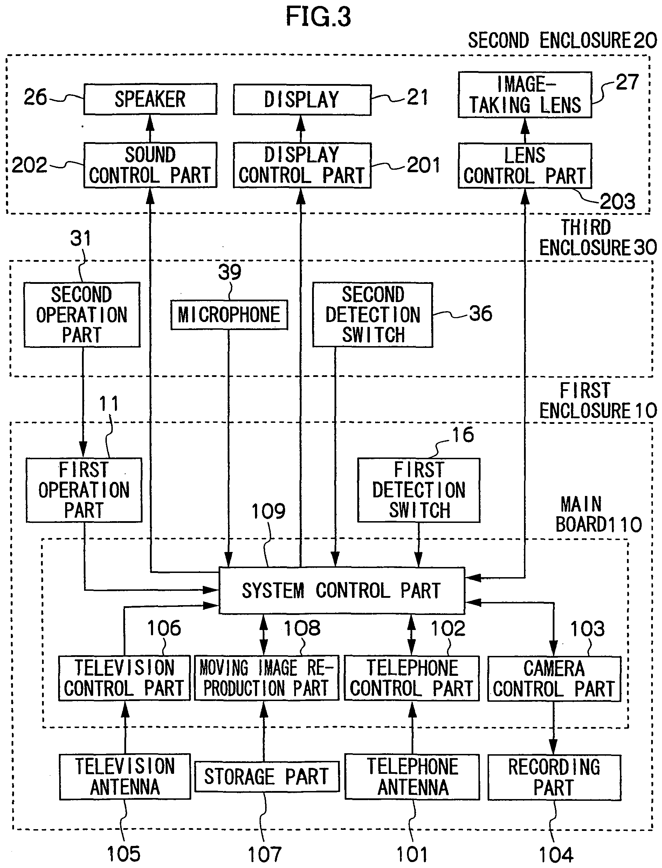

Next, by using Fig. 3, an internal configuration of the portable device 1 will be described. Fig. 3 is a system block diagram of the portable device 1.

The first enclosure 10 includes a first detection switch 16 for detecting which position of a first position, a second position and a third position the portable device 1 is in, a telephone antenna 101, a telephone control part 102 having a decoder, modulator and the like for transmitting and receiving a voice signal, a camera control part 103 taking an image of a subject via an image-taking lens 27, and digital-processing the taken image data, a recording part 104 in which taken data is stored, an television antenna 105, a television control part 106 including a tuner for receiving television, a decoder and the like, a storage part 107 including an attachable and detachable external media for storing moving image data, a moving image reproduction control part 108 including a signal processing circuit and the like for reproducing data of the moving image storage part 107, a system control part 109 selectively controlling each of the control parts, a main board 110 mounted with ICs and electronic components of these control parts, and a battery not shown, in addition to the first control part 11 shown in Fig. 1C.

The second enclosure 20 includes a display control part 201 including a driver and the like for displaying letters and images on the display 21, a voice output control part 202 including an amplifier or the like amplifying an output signal and controlling the speaker 26, and a lens control part 203 for changing a focus and a diaphragm of the lens 27, in addition to the display 21 and the speaker 26 shown in Fig. 1A and the image-taking lens 27 shown in Fig. 2B, and these ICs and electronic components are connected to the main board 110 by a flexible printed board not shown.

The third enclosure 30 is provided with a second detection switch 36 for detecting which position of the first position, the second position and the third position the portable device 1 is in, in addition to the second operation part 31 and the microphone 39 shown in Fig. 1B, and these ICs and electronic components are connected to the main board 110 by a flexible printed board not shown.

The portable device 1 thus configured can perform a call to an optional number, transmission and reception of an electronic mail and the like by using the second operation part 31 in the second position shown in Fig. 1B. In the second position, the microphone 39 is exposed, and its positional relationship is such that the microphone 39 is separated at a distance convenient for a call, whereby call is possible by using the telephone function by applying the speaker 26 and the microphone 39 to an ear and a mouth respectively, and favorable operability is provided. As shown in Fig. 2B, in the second position, the image-taking lens 27 is exposed, and by operating a shutter button of the operation part 31 with the lens pointed to a subject, whereby, image-taking is possible. On the other hand, as shown in Figs. 2A and 2C, the image-taking lens 27 is not exposed in the first position and the third position, and therefore, the image-taking lens can be protected when it is not used.

In the third position shown in Fig. 1C, television and various moving images can be viewed and listened to by using the first operation part 11. In the third position, the display 21 is horizontally oriented, and an image of a horizontally oriented television broadcasting can be efficiently displayed. The first operation part 11 exposed in the third position includes an operation button exclusive for viewing and listening to television and moving images, and is convenient for use.

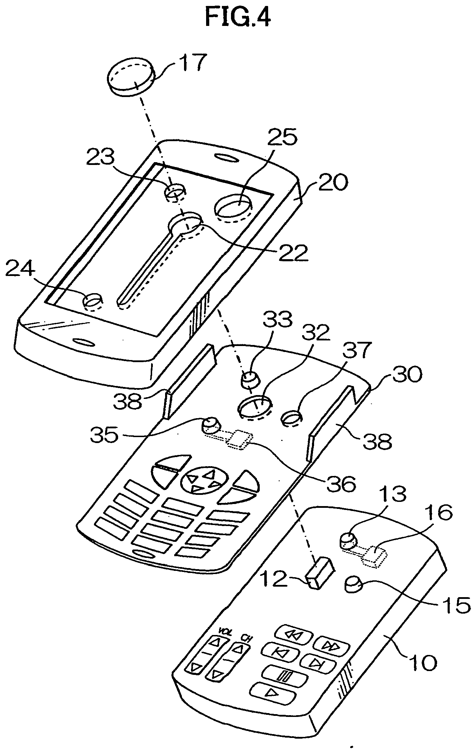

Next, a joint mechanism (link mechanism) of the portable device 1 of the embodiment according to the present invention will be described by using Fig. 4. Fig. 4 is an exploded perspective view of the portable device 1, where the second enclosure 20 is illustrated so that the bottom surface can be seen from the top portion by omitting the display 21 and the like.

As shown in Fig. 4, the first enclosure 10 is provided with a key 12 in a rectangular parallelepiped shape, a first lock pin 13, a first detection switch 16 for detecting whether the first lock pin 13 is pressed or not, and a second lock pin 15. The third enclosure 30 is provided with a round hole 32 for rotation, a third lock pin 33, a fourth lock pin 35, a second detection switch 36 for detecting whether the fourth lock pin 35 is pressed or not, a third round hole 37, and restriction plates 38 on both sides. The key 12 is rotatable inside the round hole 32 for rotation, and the hole diameter of the third round hole 37 is larger than the diameters of the first lock pin 13 and the second lock pin 15 so that the first lock pin 13 and the second lock pin 15 are fittable in it. The height of the restriction plates 38 is smaller than the thickness of the second enclosure 20.

A keyhole-shaped slit 22, a first round hole 23, a second round hole 24, and a round hole 25 for a lens for disposing a lens for image-taking are provided on a bottom surface portion of the second enclosure 20. The hole diameters of the first round hole 23 and the second round hole 24 are larger than the diameters of the third lock pin 33 and the fourth lock pin 35 so that the third lock pin 33 and the fourth lock pin 35 are fittable therein. The keyhole-shaped slit 22 is formed into a shape in which a round hole portion and a long hole portion are connected. The key 12 is rotatable inside the round hole portion, whereas the key 12 is slidable inside the long hole portion, and the width of the long hole portion is formed to be smaller than the key 12 in the long surface direction.

The key 12 provided on the first enclosure 10 is fitted and fixed to a slipping-off prevention cap 17 through the round hole 32 for rotation of the third enclosure and the keyhole-shape slit 22 of the second enclosure. The diameter of the slipping-off prevention cap 17 is larger than the round hole 32 for rotation and the round hole portion of the keyhole-shaped slit 22. Thus, the portable device 1 of the embodiment according to the present invention has a constitution in which the first enclosure 10 and the second enclosure 20 are integrated to sandwich the third enclosure 30.

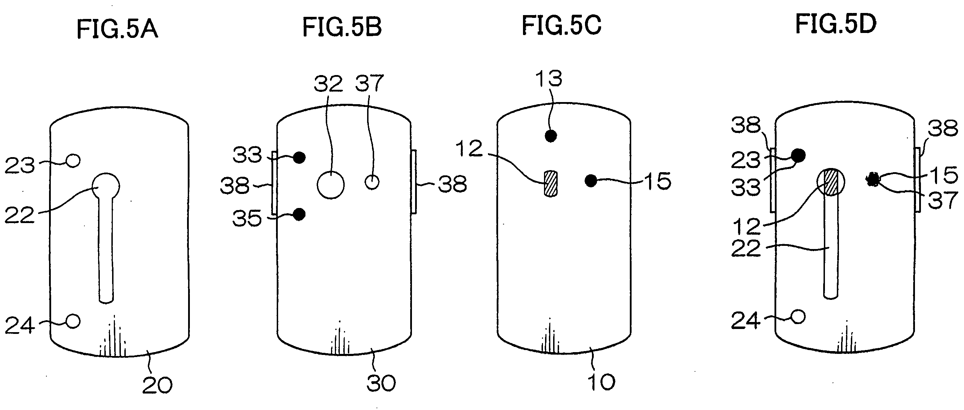

Next, the first position that is the stored state shown in Fig. 1A of the portable device 1 will be described by using Figs. 5A to 5D. Figs. 5A to 5D are views of the respective enclosures of the portable device 1 seen from the top surface.

Fig. 5A shows the state of the second enclosure 20 seen from the top surface, and shows the keyhole-shaped slit 22, the first round hole 23 and the second round hole 24 are shown by omitting the display 21 and the like as in Fig. 4. The round hole 25 for a lens is omitted here. Fig. 5B shows the state of the third enclosure 30 seen from the top surface, and shows the round hole 32 for rotation, the third lock pin 33, the fourth lock pin 35, the third round hole 37, and the restriction plates 38. Fig. 5C shows the state of the first enclosure 10 seen from the top surface, and shows the key 12, the first lock pin 13 and the second lock pin 15. The slipping-off prevention cap 17 fitted and fixed to the key 12 is omitted here.

Fig. 5D is a view of the first position that is the state in which the third enclosure 30 is overlaid on the first enclosure 10, and the second enclosure 20 is further overlaid on the third enclosure 30, that is, the stored state seen from the top surface. The second lock pin 15 and the third round hole 37 should be originally hidden behind the second enclosure 20 and invisible but are shown through the second enclosure 20 for convenience.

When the third enclosure 30 is overlaid on the first enclosure 10, the key 12 provided on the first enclosure penetrates through the round hole 32 for rotation provided on the third enclosure, and at the same time, the second lock pin 15 provided on the first enclosure is fitted in the third round hole 37 provided in the third enclosure. When the second enclosure 20 is further overlaid on the third enclosure 30, the key 12 which penetrates through the round hole 32 for rotation penetrates through the round hole portion of the keyhole-shaped slit 22 provided in the second enclosure, and at the same time, the third lock pin 33 provided in the third enclosure is fitted in the first round hole 23 provided in the second enclosure. Further, the slipping-off prevention cap 17 not shown here is fitted and fixed to the key 12.

As above, in the first position that is the stored state, the first enclosure 10 and the second enclosure 20 are integrated to sandwich the third enclosure 30, and this position can be maintained by fitting of the lock pin and the round hole.

In this state, the first lock pin 13 provided in the first enclosure 10 is pressed by the bottom surface portion of the third enclosure 30, and therefore, the first detection switch 16 provided at the lower portion of the first lock pin 13 is in an ON state. Similarly, the fourth lock pin 35 provided in the third enclosure 30 is pressed by the bottom surface portion of the second enclosure 20, and therefore, the second detection switch 36 provided at the lower portion of the fourth lock pin 35 is also in an ON state.

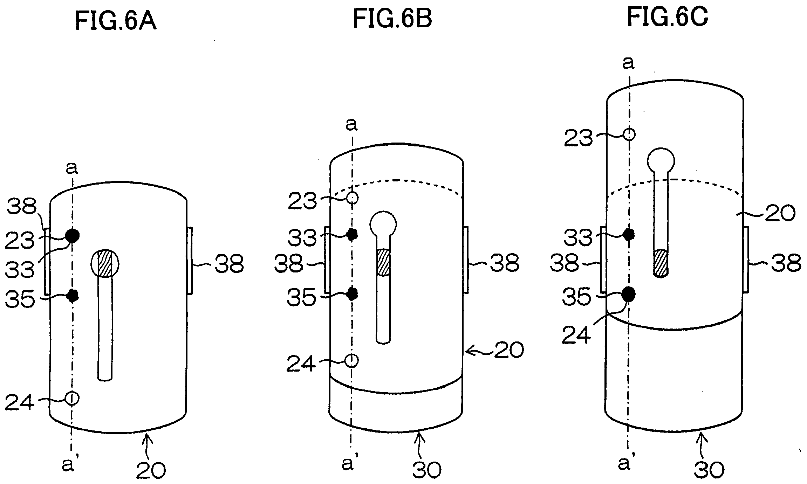

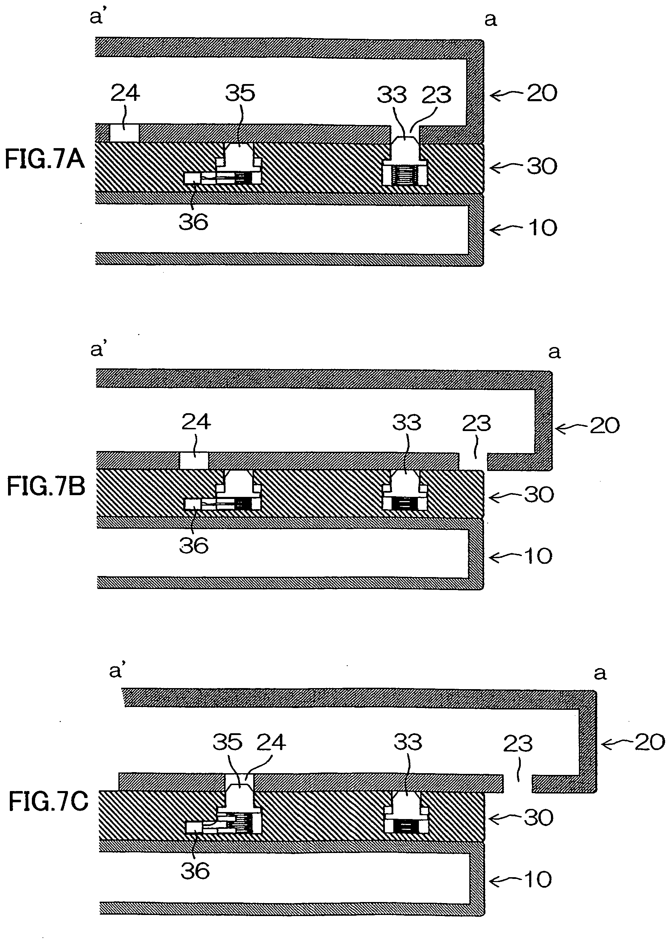

Next, a shift to the second position in which the display device is used in the vertical orientation shown in Fig. 1B from the first position which is the stored state of the portable device 1 will be described by using Figs. 6A to 6C and 7A to 7C.

Figs. 6A to 6C are views of transition of slide movement of the portable device 1 to the second position from the first position seen from the top surface. Concerning the second enclosure 20, a bottom surface is in a visible state by omitting the display 21 and the like, and the slipping-off prevention cap 17 is also omitted. Figs. 7A to 7C are sectional views along the lines a to a' in Figs. 6A to 6C.

Fig. 6A is a top view of the first position, and Fig. 7A is a sectional view taken in the line a to a' in Fig. 6A. The fourth lock pin 35 provided in the third enclosure 30 is invisible from the top surface, but is shown through the top surface for convenience. Since the fourth lock pin 35 is pressed by the back surface of the second enclosure 20 as shown in Fig. 7A, the second detection switch 36 is turned ON, and the third lock pin 33 is fitted in the first round hole 23.

Fig. 6B shows the state in which the second enclosure 20 is slid to move to the upper portion in the drawing from the state of Fig. 6A, and Fig. 7B is a sectional view taken in the line a to a' of Fig. 6B. In this state, fitting of the first round hole 23 and the third lock pin 33 is released, and the second enclosure 20 slides to move to the upper portion in such a manner as to be guided by the restriction plates 38 provided in the third enclosure. The third lock pin 33 cannot be seen from the top surface, but is shown through the top surface for convenience here.

Here, the third enclosure 30 is provided with only the round hole 32 for rotation, and does not have a long hole portion like the keyhole-shaped slit 22 of the second enclosure 20, and therefore, cannot slide to move to the upper portion as the second enclosure 20. Therefore, the third enclosure 30 maintains the state integrated with the first enclosure 10 by fitting of the second lock pin 15 and the third round hole 37, and only the second enclosure 20 can slide to move in the upper direction.

Fig. 7C shows a view showing that the second enclosure 20 is further slid to move to the upper portion in the drawing from the state of Fig. 7B, and is in the second position which is the state in which the display portion is used in the vertical orientation, and Fig. 7C is a sectional view in the line a to a' in Fig. 6C.

In this state, the key 12 is butted against the terminal end of the long hole portion of the keyhole-shaped slit 22, and further sliding movement from it is restrained, and at the same time, the second round hole 24 provided in the second enclosure and the fourth lock pin 35 provided in the third enclosure are fitted to be able to maintain this position. Specifically, in the state in which the display 21 provided on the second enclosure 20 is slid to move to the upper portion, the second operation part 31 provided on the third enclosure 30 is exposed, and the second operation part 31 can be used in the state in which the display 21 is seen in the vertical direction. In this state, the fourth lock pin 35 is fitted in the second round hole 24, and therefore, the second detection switch 36 provided at the lower portion of the fourth lock pin 35 is in the OFF state. The positional relationship of the first enclosure 10 and the third enclosure 30 does not change, and therefore, the first detection switch 16 not shown remains in the ON state.

The second enclosure 20 can be easily returned to the first position from the second position by sliding and moving the second enclosure 20 to the lower portion in the drawing.

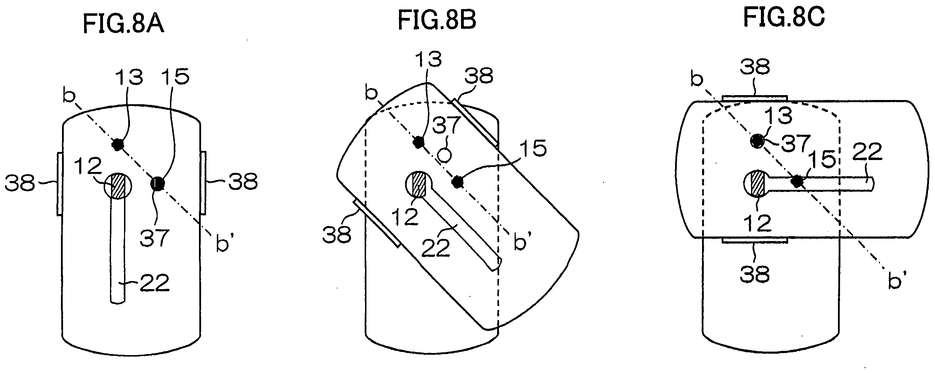

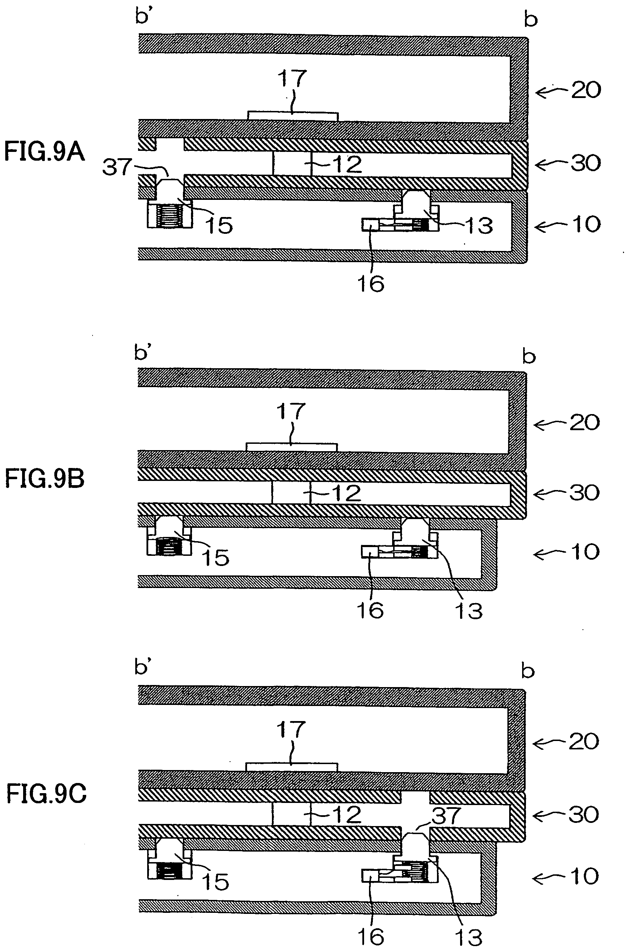

Next, a shift to the third position in which the display device is used in the horizontal orientation shown in Fig. 1C from the first position that is the stored state of the portable device 1 will be described by using Figs. 8A to 8C and 9A to 9C.

Figs. 8A to 8C are views of the transition of the rotational movement of the portable device 1 to the third position from the first position seen from the top surface. As for the second enclosure 20, the bottom surface is in a visible state by omitting the display 21 and the like, and the slipping-off prevention cap 17 is omitted. Figs. 9A to 9C are sectional views in the lines b to b' in Figs. 8A to 8C.

Fig. 8A is a top view of the first position, Fig. 9A is a sectional view in the line b to b' in Fig. 8A. The first lock pin 13 provided in the first enclosure 10 cannot be seen from the top surface, but it is shown through the top surface for convenience.

As described above, in the first position, the first round hole 23 and the third lock pin 33 are fitted to each other, and similarly, the third round hole 37 and the second lock pin 15 are fitted to each other.

Fig. 8B is a view showing the state in which the third enclosure 30 is rotated counterclockwise from the state of Fig. 8A, and Fig. 9B is a sectional view in the line b to b' of Fig. 8B. In this state, fitting of the third round hole 37 and the second lock pin 15 is released, and the third enclosure 30 rotationally moves around the round hole 32 for rotation through which the key 12 penetrates. In this case, the restriction plates 38 are provided on both sides of the third enclosure 30, and therefore, when the third enclosure 30 is rotationally moved, the second enclosure 20 also rotationally moves integrally with the third enclosure.

Fig. 8C is a view showing that the third enclosure 30 is further rotated counterclockwise from the state of Fig. 8B, and is in the third position in which the display device is used in the horizontal orientation, and Fig. 8C is a sectional view in the line b to b' in Fig. 9C. In this state, the third round hole 37 provided in the third enclosure 30 is fitted to the first lock pin 13 provided in the first enclosure 10 to be able to maintain this position. Specifically, the first operation part 11 provided in the first enclosure 10 is exposed in the state in which the display 21 provided in the second enclosure 20 is rotationally moved to the upper portion, and the first operation part 11 can be used with the display 21 seen in the horizontal direction.

In.this state, the first lock pin 13 is fitted in the third round hole 37, and therefore, the first detection switch 16 provided at the lower portion of the first lock pin 13 is in the OFF state. Since the positional relationship of the third enclosure 30 and the second enclosure 20 does not change, the second detection switch 36 not shown remains in the ON state. Counterclockwise rotation of the third enclosure 30 is restricted to the 90 degrees by a stopper not shown, and therefore, the third enclosure 30 does not rotate more than 90 degrees.

Further, the portable device can be easily returned to the first position from the third position by rotationally moving the third enclosure 30 clockwise. At this time, the second enclosure 20 rotates integrally with the third enclosure 30 by the restriction plates 38.

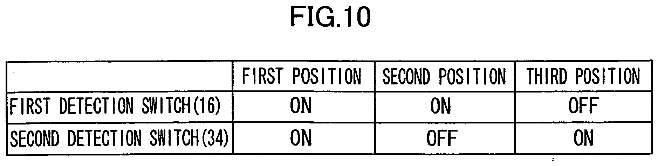

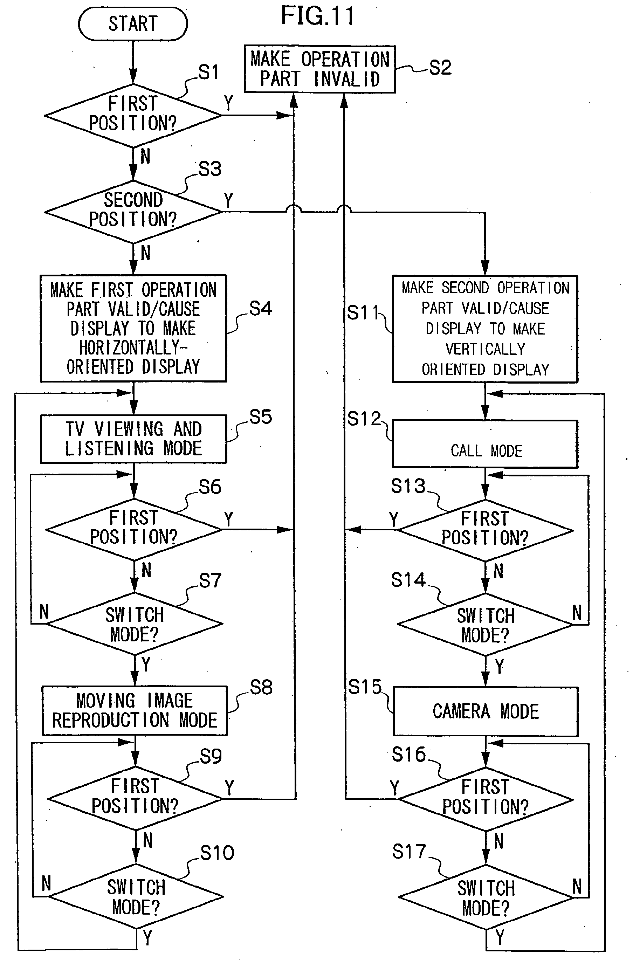

Next, an operation of the portable device 1 will be described by using Figs. 10 and 11. Fig. 10 is a table showing an ON/OFF state of the first detection switch 16 and the second detection switch 34 at each position, and as described above, the combination of ON and OFF differs in accordance with each position. Fig. 11 is a flowchart showing an operation state of the portable device 1.

First, the system control part 109 determines which state the portable device 1 is in based on ON/OFF information of the first detection switch 16 and the second detection switch 34. First, the system control part 109 determines whether the portable device 1 is in the first position or not (step S1). When it determines that the portable device is in the first position, it makes inputs of the first operation part 11 and the second operation part 31 invalid and brings the display 21 into a non-display state at the same time (step S2), and reduces power consumption. The system control part 109 maintains the state until it determines that the position is shifted to another position. In the first position, the portable device is in a call waiting mode, and arrival of a telephone call and reception of an electronic mail are possible by the system control part 109 operating the telephone control part 102. Thereafter, in any mode, arrival of a telephone call and reception of an electronic mail are possible.

When the system control part 109 determines that the portable device is not in the first position, it determines whether the portable device is in the second position or in the third position next (step S3). When it determines that the portable device is in the third position here, it makes the first operation part 11 valid, and causes the display 21 to display horizontally (step S4).

Next, the system control part 109 sets the portable device 1 in a television viewing and listening mode (step S5), and causes the television control part 106 to operate to make television viewing and listening possible. Since at this time the first operation part 11 suitable for television viewing and listening is exposed and the operation is valid, channel switching, volume adjustment and the like are possible by using the first operation part 11.

The system control part always monitors the first detection switch 16 and the second detection switch 34 (step S6), and when it determines that the position shifts to the first position, it makes the first operation part 11 invalid and stops display on the display (step S2).

In this state, it is possible to shift the portable device to a moving image reproduction mode from a television viewing and listening mode by using the first operation part 11 (step S7). The mode switching may be performed by inserting external media into the storage part 107. When the mode switching is performed, the system control part 109 sets the portable device 1 in the moving image reproduction mode (step S8), stops the television control part 106 and operates the moving image reproduction control part 108 to enable moving image reproduction. At this time, the first operation part 11 suitable for moving image reproduction is exposed as in the television viewing and listening mode, and the input is made valid. Therefore, start, stop and temporary stop of reproduction, volume adjustment and the like are possible by using the first operation part 11.

As in the television viewing and listening mode, the system control part always monitors the first detection switch 16 and the second detection switch 34 (step S9), and when it determines that the portable device shifts to the first position, it makes the first operation part 11 invalid, and stops the display on the display (step S2).

It is possible to shift the portable device to the television viewing and listening mode from the moving image reproduction mode (step S10), and when mode switching is performed, the system control part 109 sets the portable device 1 in the television viewing and listening mode (step S5), and stops the moving image reproduction control part 108 and operates the television control part 106 to enable television viewing and listening.

When the system control part 109 determines that the portable device is in the second position in step S3, it makes the second operation part 31 valid and allows the display 21 to display in the vertical orientation (step S11). Next, the system control part 109 sets the portable device 1 in the call mode (step S12), and controls the telephone control part 102, whereby a call to an optional number, transmission of an electronic mail, address book search and the like are enabled in addition to arrival of a telephone call and reception of an electronic mail which are possible in all the modes. Since at this time, the second operation part 31 suitable for the telephone function is exposed, and the input is valid, favorable usability is obtained.

The system control part always monitors the first detection switch 16 and the second detection switch 34 (step S13), and when the system control part determines that the portable device shifts to the first position, it makes input of the second operation part 31 invalid, and brings the display 21 into a non-display state (step S2).

It is possible to shift the portable device to a camera mode from the call mode by using the second operation part 31 (step S15). When mode switching is performed, the system control part 109 sets the portable device 1 in the camera mode (step S15), controls the telephone control part 102 to limit the telephone function only to arrival of a telephone call and reception of an electronic mail, and operates the camera control part 103 to enable image-taking. At this time, the second operation part 31 suitable for image-taking is exposed as in the call mode, and the input is valid. Therefore, image-taking mode switching, zoom adjustment and actual image-taking are possible by using the second operation part 31.

The system control part 109 always monitors the first detection switch 16 and the second detection switch 34 as in the call mode (step S16). When the system control part 109 determines that the portable device shifts to the first position, it makes the second operation part 31 invalid and brings the display 21 into a non-display state (step S2).

Further, it is possible to shift the portable device to the call mode from the camera mode (step S17), and when mode switching is performed, the system control part 109 sets the portable device 1 in the call mode (step S12), and stops the camera control part 103 and controls the telephone control part 102 to enable a call and electronic mail transmission.

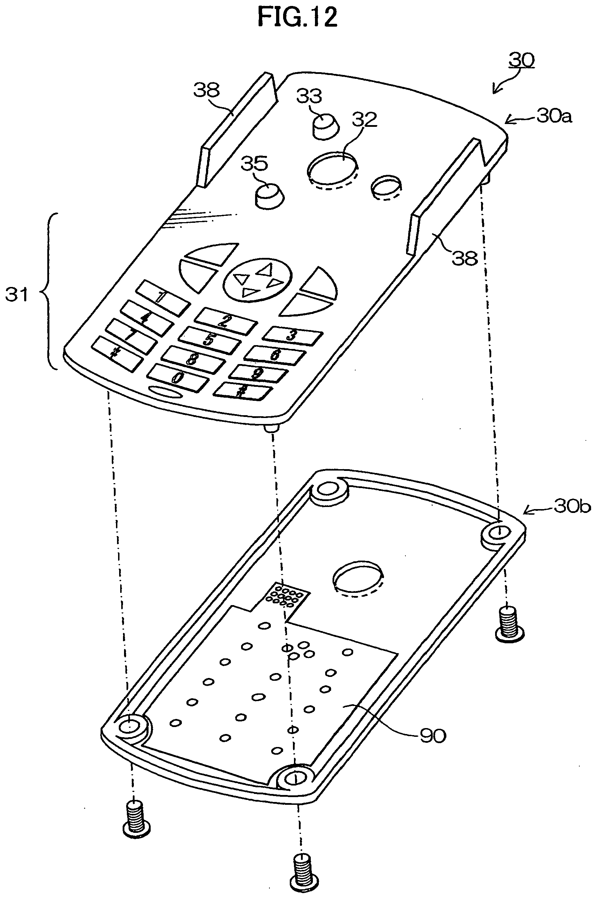

Next, the third enclosure 30 will be described by using Fig. 12. Fig. 12 is an exploded perspective view of the third enclosure 30. The third enclosure 30 includes a top surface part 30a including the second operation part 31, the third lock pin 33, the fourth lock pin 35 and the restriction plates 38, a membrane switch 90 and a lower surface part 30b, and is configured so that the top surface part 30a and the lower surface part 30b sandwich the membrane switch 90.

The membrane switch 90 connects to the main board 110 of the first enclosure 10 by using a flexible printed board not shown as the signals of the second detection switch 36 and the microphone 39. By adopting such a configuration, the button arrangement of the first operation part 11 and the button arrangement of the second operation part 31 can be freely set, and the button arrangement suitable for each function can be made.

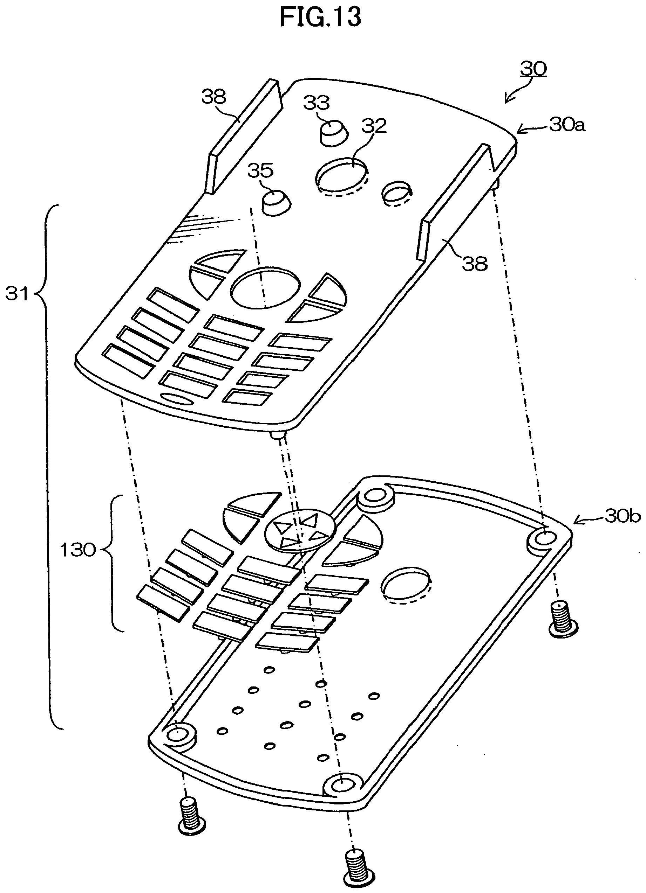

The third enclosure 30 is not limited to the embodiment, and may be configured as shown in Fig. 13. The third enclosure 30 shown in Fig. 13 includes only key tops of the operation buttons, and when the key top is pressed, the key shaft projects from a hole portion for a key shaft provided in the bottom surface portion of the third enclosure 30.

Fig. 13 is an exploded perspective view of the third enclosure 30. The third enclosure 30 includes the top surface part 30a including the third lock pin 33, the fourth lock pin 35 and the restriction plates 38, the lower surface part 30b including the hole portions for key shafts, and a key top group 130, and is configured so that the top surface part 30a and the lower surface part 30b sandwich the key top group 130.

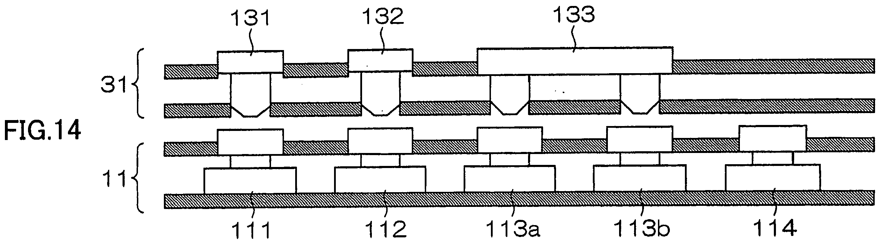

Fig. 14 is a sectional view of the second operation part 31 of the third enclosure and the first operation part 11 of the first enclosure 10 in the second position. As described above, in the second position, only the second enclosure 20 slides to move, the third enclosure 30 and the first enclosure 10 are integrated, and the second operation part 31 of the third enclosure 30 is exposed by the second enclosure 20 sliding to move. At this time, the positional relationship of the operation buttons of the second operation part 31 and the first operation part 11 has the configuration as shown in Fig. 14. Specifically, the first key top 131 of the second operation part 31 is disposed directly above a first operation button 111 of the first operation part 11, and the second key top 132 of the second operation part 31 is disposed directly above a second operation button 112 of the first operation part 11.

By disposing them as above, by a user pressing the first key top 131, the key shaft of the first key top 131 presses the first operation button 111 through the hole portion for the key shaft, and by the user pressing the second key top 132, the operation of the key shaft of the second key top 132 pressing the second operation button 112 through the round hole for the key shaft becomes possible.

The system control part 109 can determine which position of the second position and the third position the portable device is in by the ON/OFF state of the position detection switch in advance as shown in Fig. 9, and therefore, it can distinguish whether the input of the first operation button 111 is the input made by directly pressing the first operation button 111 or the input made by pressing the first operation button 111 made by pressing the first key top 131.

As shown in Fig. 13, if all the key tops of the second operation part 31 are configured as above, the structure is simplified, exchange of signals of the flexible printed boards of the third enclosure 30 and the first enclosure 10 can be reduced, and cost can be reduced.

As shown in Fig. 14, it is possible to dispose a third key top 133 including two key shafts and hole portions for key shafts with one operation button directly above a third operation button 113a and a fourth operation button 113b of the first operation part 11. By adopting such a configuration, the key shaft of the third key top 133 presses the third operation button 113a through the round hole for the key shaft when the left side of the third key top 133 is pressed, the key shaft of the third key top 133 presses the fourth operation button 113b through the round hole for the key shaft when the right side of the third key top 133 is pressed, and the key shafts of the third key top 133 press both the third operation button 113a and the fourth operation button 113b through the round holes for the key shafts when the center of the third key top 133 is pressed, and they can be assigned to different functions respectively.

As shown in Fig. 14, it is possible not to dispose a key top of the second operation part 31 directly above the fifth operation button 114 of the first operation part 11.

As above, according to the present invention, the portable device can be brought into the use state from the stored state by one action, the orientation of the display can be changed in correspondence with the use purpose, and the operation part corresponding to the use purpose can be used. Therefore, portable device with high usability can be realized.

## Claims

1. A portable device (1), comprising:
a first enclosure (10) including a first operation part (11);
a second enclosure (20) including a display part (21);
a third enclosure (30); and
a joint mechanism (12, 22, 32) which joins the first enclosure (10), the second enclosure (20) and the third enclosure (30) respectively, and joins the second enclosure movably with respect to the first enclosure from a first position in which a silhouette of the second enclosure is overlaid on the first enclosure to a second position and a third position differing from each other,
wherein, in the first position, the joint mechanism (12, 22, 32) integrally joins the second enclosure (20) so as to be overlaid on silhouettes of the first enclosure (10) and the third enclosure (30),
and wherein, when the second enclosure (20) is moved to the second position from the first position, the joint mechanism causes the third enclosure (30) to be exposed by restricting a moving amount of the third enclosure accompanying the movement of the second enclosure to zero or to be smaller than a moving amount of the second enclosure,
and wherein, when the second enclosure (20) is moved to the third position from the first position, the joint mechanism (12, 22, 32) causes the first operation part (11) to be exposed in an operable state by restricting the moving amount of the third enclosure accompanying the movement of the second enclosure to be the same as that of the second enclosure or to be smaller than the moving amount of the second enclosure,
**characterized in that** the joint mechanism (12, 22, 32) is so constituted that either the movement of the second enclosure (20) to the second position relative to the first enclosure or the movement of the second enclosure (20) to the third position relative to the first enclosure is a parallel movement, and the other movement of the second enclosure relative to the first enclosure is a rotational movement, and **in that**
the joint mechanism (12, 22, 32) comprises:
a key (12) in a rectangular parallelepipedal shape, which is disposed on the first enclosure (10);
a round hole (32) for rotation in which the key (12) can rotate and which is disposed on the third enclosure (30);
a keyhole-shaped slit (22) which is formed on a bottom surface of the second enclosure (20), and formed into a shape composed of a round hole portion in which the key can rotate and a long hole portion having a width smaller than a longer side of the key, the key (12) being slideable in the long hole portion; and
a slipping-off prevention cap (17) which is disposed on the first enclosure (10) and fitted and fixed to the key on the first enclosure (10) through the round hole (32) and the keyhole-shaped slit (22).

2. The portable device (1) according to claim 1,
wherein the joint mechanism (12, 22, 32) is constituted so that
when the second enclosure (20) moves to the second position from the first position with respect to the first enclosure (10), the second enclosure performs parallel movement, and
when the second enclosure moves to the third position from the first position with respect to the first enclosure, the second enclosure performs rotational movement.

3. The portable device (1) according to claim 2, further comprising a restriction mechanism (38) restricting movement of the second enclosure (20),
wherein the restriction mechanism restricts the motion of the second enclosure so as to
allow parallel movement and rotational movement of the second enclosure in the first position,
allow only the parallel movement of the second enclosure in the second position, and
allow only the rotational movement of the second enclosure in the third position.

4. The portable device (1) according to claim 1,
wherein the joint mechanism (12, 22, 32) is constituted so that
when the second enclosure (20) moves to the second position from the first position with respect to the first enclosure (10), the second enclosure performs rotational movement, and
when the second enclosure moves to the third position from the first position with respect to the first enclosure, the second enclosure performs parallel movement.

5. The portable device (1) according to claim 3, wherein
the restriction mechanism comprises restriction plates (38) disposed on both sides of the third enclosure (30), with a height shorter than a thickness of the second enclosure (20).

6. The portable device (1) according to claim 4, further comprising a restriction mechanism (38) restricting movement of the second enclosure (20),
wherein the restriction mechanism (38) restricts motion of the second enclosure (20) so as to
allow parallel movement and rotational movement of the second enclosure (20) in the first position,
allow only rotational movement of the second enclosure (20) in the second position, and
allow only parallel movement of the second enclosure (20) in the third position.

7. The portable device (1) according to any preceding claim, further comprising:
a stop mechanism (13, 15, 23, 24, 33, 35, 37) stopping the second enclosure (20) with predetermined holding forces respectively in the first position, the second position and the third position.

8. The portable device (1) according to claim 7, wherein
the stop mechanism (13, 15, 23, 24, 33, 35, 37) comprises:
a first lock pin (13) disposed on the first enclosure (10);
a second lock pin (15) disposed on the first enclosure (10);
a third lock pin (33) disposed on the third enclosure (30);
a fourth lock pin (35) disposed on the third enclosure (30);
a first round hole (23) on a bottom surface of the second enclosure (20);
a second round hole (24) on the bottom surface of the second enclosure (20); and
a third round hole (37) on a bottom surface of the third enclosure (30),
wherein:
when the third enclosure is overlaid onto a silhouette of the first enclosure (10), the second lock pin (15) on the first enclosure (10) fits in the third round hole (37) on the third enclosure (30);
when the second enclosure (20) is overlaid onto a silhouette of the third enclosure (30), the third lock pin (33) fits in the first round hole (23);
when the second enclosure (20) is relatively slid with respect to the first enclosure (10) to expose the third enclosure (30), the fourth lock pin (35) fits in the second round hole (24); and
when the second enclosure (20) is relatively rotated with respect to the first enclosure (10) to expose the first operation part (11), the first lock pin (13) fits in the third round hole (37).

9. The portable device (1) according to any preceding claim, further comprising:
a position detecting device (16, 36) capable of detecting which position of the first position, the second position and the third position the portable device is in; and
a mode selecting device (109) selecting a usable operation mode from a plurality of operation modes,
wherein the mode selecting device (109) automatically selects a usable operation mode from the plurality of operation modes based on a detection result of the position detecting device.

10. The portable device (1) according to claim 8, further comprising:
a first detection switch (16) which detects whether the first lock pin (13) is pressed by a bottom surface of the third enclosure (30);
a second detection switch (36) which detects whether the fourth lock pin (35) is pressed by the bottom surface of the second enclosure (20);
a position detecting device (16, 36) capable of detecting which position of the first position, the second position and the third position the portable device (1) is in, according to ON/OFF states of the first detection switch (16) and the second detection switch (36); and
a mode selecting device (109) selecting a usable operation mode from a plurality of operation modes, according to a position detection result by the position detecting device (16, 36).

11. The portable device (1) according to any preceding claim, wherein
the third enclosure (30) includes a second operation part, and
the second position is a position where the second operation part is exposed to be operable.

## Patentansprüche

1. Eine tragbare Vorrichtung (1), umfassend:
ein erstes Gehäuse (10) umfassend ein erstes Betätigungsteil (11);
ein zweites Gehäuse (20) umfassend ein Anzeigeteil (21);
ein drittes Gehäuse (30); und
einen Gelenkmechanismus (12, 22, 32), der das erste Gehäuse (10), das zweite Gehäuse (20) und das dritte Gehäuse (30) jeweils verbindet, und das zweite Gehäuse bewegbar in Bezug auf das erste Gehäuse von einer ersten Position, in welcher eine Silhouette von dem zweiten Gehäuse auf das erste Gehäuse drüber gelegt ist, zu einer zweiten Position und einer dritte Position verbindet, sich unterscheidend voneinander,
wobei der Gelenkmechanismus (12, 22, 32) in der ersten Position integral das zweite Gehäuse (20) verbindet, so dass es auf Silhouetten von dem ersten Gehäuse (10) und dem dritten Gehäuse (30) drüber gelegt wird,
und wobei, wenn das zweite Gehäuse (20) zu der zweiten Position von der ersten Position bewegt wird, der Gelenkmechanismus das dritte Gehäuse (30) veranlasst exponiert zu sein durch Beschränken einer Bewegungsmenge von dem dritten Gehäuse, begleitend die Bewegung von dem zweiten Gehäuse, auf Null oder zu einer geringeren als eine Bewegungsmenge von dem zweiten Gehäuse,
und wobei, wenn das zweite Gehäuse (20) von der ersten Position in die dritte Position bewegt wird, der Gelenkmechanismus (12, 22, 32) das erste Betätigungsteil (11) veranlasst in einen betreibbaren Zustand exponiert zu sein durch Beschränken der Bewegungsmenge von dem dritten Gehäuse, begleitend die Bewegung von dem zweiten Gehäuse, die gleiche zu sein als die von dem zweiten Gehäuse oder geringer zu sein als die Bewegungsmenge von dem zweiten Gehäuse,
**dadurch gekennzeichnet, dass** der Gelenkmechanismus (12, 22, 32) so gebildet ist, dass entweder die Bewegung von dem zweiten Gehäuse (20) zu der zweiten Position relativ zu dem ersten Gehäuse oder die Bewegung von dem zweiten Gehäuse (20) zu der dritten Position relativ zu dem ersten Gehäuse eine parallele Bewegung ist, und die andere Bewegung von dem zweiten Gehäuse relativ zu dem ersten Gehäuse eine Drehbewegung ist, und dass
der Gelenkmechanismus (12, 22, 32) umfasst:
einen Schlüssel (12) in einer rechteckigen Parallelflächnerform, welcher auf dem ersten Gehäuse (10) angeordnet ist;
ein Rundloch (32) für Rotation, in welchem der Schlüssel (12) rotieren kann und welches auf dem dritten Gehäuse (30) angeordnet ist;
ein Schlüsselloch-geformter Schlitz (22), welcher auf einer Bodenoberfläche von dem zweiten Gehäuse (20) gebildet ist, und in einer Form gebildet ist, bestehend von einem Rundlochabschnitt, in welchem sich der Schlüssel drehen kann und einem Langlochabschnitt, aufweisend eine Breite schmaler als eine längere Seite von dem Schlüssel, wobei der Schlüssel (12) in dem Langlochabschnitt verschiebbar ist; und
eine Abrutschverhinderungs-Kappe (17), welche auf dem ersten Gehäuse (10) angeordnet ist und angepasst und zu dem Schlüssel befestigt ist auf dem ersten Gehäuse (10) durch das Rundloch (32) und dem Schlüsselloch-geformten Schlitz (22).

2. Die tragbare Vorrichtung (1) gemäß Anspruch 1,
wobei der Gelenkmechanismus (12, 22, 32) so ausgebildet ist, dass,
wenn sich das zweite Gehäuse (20) von der ersten Position in Bezug auf das erste Gehäuse (10) in die zweite Position bewegt, das zweite Gehäuse eine Parallelbewegung ausführt, und
wenn das zweite Gehäuse sich von der ersten Position in Bezug auf das erste Gehäuse zu der dritten Position bewegt, das zweite Gehäuse eine Drehbewegung ausführt.

3. Die tragbare Vorrichtung (1) gemäß Anspruch 2, des Weiteren umfassend einen Beschränkungsmechanismus (38) beschränkend Bewegung von dem zweiten Gehäuse (20),
wobei der Beschränkungsmechanismus die Bewegung von dem zweiten Gehäuse beschränkt, um so
parallele Bewegung und Rotationsbewegung von dem zweiten Gehäuse in die erste Position zu erlauben,
nur die parallele Bewegung von dem zweiten Gehäuse in die zweite Position zu erlauben, und
nur die Drehbewegung von dem zweiten Gehäuse in die dritte Position zu erlauben.

4. Die tragbare Vorrichtung (1) gemäß Anspruch 1,
wobei der Gelenkmechanismus (12, 22, 32) so ausgebildet ist, dass,
wenn sich das zweite Gehäuse (20) von der ersten Position in Bezug auf das erste Gehäuse (10) in die zweite Position bewegt, das zweite Gehäuse eine Drehbewegung ausführt, und
wenn sich das zweite Gehäuse von der ersten Position in Bezug auf das erste Gehäuse zu der dritten Position bewegt, das zweite Gehäuse eine Parallelbewegung ausführt.

5. Die tragbare Vorrichtung (1) gemäß Anspruch 3, wobei
der Begrenzungsmechanismus Begrenzungsplatten (38) umfasst, welche an beiden Seiten von dem dritten Gehäuse (30) angeordnet sind, mit einer Höhe kürzer als eine Dicke von dem zweiten Gehäuse (20).

6. Die tragbare Vorrichtung (1) gemäß Anspruch 4, des Weiteren umfassend einen Beschränkungsmechanismus (38) beschränkend Bewegung von dem zweiten Gehäuse (20),
wobei der Beschränkungsmechanismus (38) Bewegung von dem zweiten Gehäuse (20) beschränkt, um so
parallele Bewegung und Drehbewegung von dem zweiten Gehäuse (20) in die erste Position zu erlauben,
nur Drehbewegung von dem zweiten Gehäuse (20) in die zweite Position zu erlauben, und
nur parallele Bewegung von dem zweiten Gehäuse (20) in die dritte Position zu erlauben.

7. Die tragbare Vorrichtung (1) gemäß irgendeinem der vorhergehenden Ansprüche, des Weiteren umfassend:
einen Anschlagmechanismus (13, 15, 23, 24, 33, 35, 37), der das zweite Gehäuse (20) mit vorbestimmten Haltekräften jeweils in der ersten Position, der zweite Position und der dritte Position stoppt.

8. Die tragbare Vorrichtung (1) gemäß Anspruch 7, wobei der Anschlagmechanismus (13, 15, 23, 24, 33, 35, 37) umfasst:
einen ersten Verriegelungsstift (13), welcher an das erste Gehäuse (10) angeordnet ist;
einen zweiten Verriegelungsstift (15), welcher an das erste Gehäuse (10) angeordnet ist;
einen dritten Verriegelungsstift (33), welcher an das dritte Gehäuse (30) angeordnet ist;
einen vierten Verriegelungsstift (35), welcher an das dritte Gehäuse (30) angeordnet ist;
ein erstes Rundloch (23) an einer Bodenfläche von dem zweiten Gehäuse (20);
ein zweites Rundloch (24) an der Bodenfläche von dem zweiten Gehäuse (20); und
ein drittes Rundloch (37) auf einer Bodenfläche von dem dritten Gehäuse (30), wobei:
Wenn das dritte Gehäuse auf eine Silhouette von dem ersten Gehäuse (10) drüber gelegt wird, der zweite Verriegelungsstift (15) auf das erste Gehäuse (10) in das dritte Rundloch (37) auf dem dritten Gehäuse (30) passt;
wenn das zweite Gehäuse (20) auf eine Silhouette von dem dritten Gehäuse (30) drüber gelegt wird, der dritte Verriegelungsstift (33) in das erste Rundloch (23) passt;
wenn das zweite Gehäuse (20) in Bezug zu dem ersten Gehäuse (10) verschoben ist, um das dritte Gehäuse (30) zu exponieren, der vierte Verriegelungsstift (35) in das zweite Rundloch (24) passt; und
wenn das zweite Gehäuse (20) relativ zu dem ersten Gehäuse (10) gedreht wird, um das erste Betätigungsteil (11) zu exponieren, der erste Verriegelungsstift (13) in das dritte Rundloch (37) passt.

9. Die tragbare Vorrichtung (1) nach irgendeinem der vorhergehenden Ansprüche, des Weiteren umfassend:
eine Positionserfassungsvorrichtung (16, 36), geeignet zum Detektieren, welche Position von der ersten Position, der zweiten Position und der dritten Position der tragbaren Vorrichtung drinnen ist;
und
eine Modusauswahleinrichtung (109), die einen verwendbaren Betriebsmodus von einer Vielzahl von Betriebsmodi auswählt,
wobei die Modusauswahleinrichtung (109) automatisch einen verwendbaren Betriebsmodus aus der Vielzahl von Betriebsmodi auf der Basis eines Erfassungsergebnisses der Positionserfassungsvorrichtung auswählt.

10. Die tragbare Vorrichtung (1) gemäß Anspruch 8, des Weiteren umfassend:
einen ersten Erfassungsschalter (16), der erfasst, ob der erste Verriegelungsstift (13) durch eine Bodenfläche des dritten Gehäuses (30) gedrückt wird;
einen zweiten Erfassungsschalter (36), der erfasst, ob der vierte Verriegelungsstift (35) durch die Bodenfläche des zweiten Gehäuses (20) gedrückt wird;
eine Positionserfassungseinrichtung (16, 36), geeignet zum Detektieren, welche Position von der ersten Position, der zweiten Position und der dritten Position der tragbaren Vorrichtung (1) drinnen ist, gemäß zu den EIN/AUS-Zuständen des ersten Erfassungsschalters (16) und des zweiten Erfassungsschalter (36); und
eine Modusauswahleinrichtung (109), auswählend einen nutzbaren Betriebsmodus aus einer Vielzahl von Betriebsmodi gemäß eines Positionserfassungsergebnisses durch die Positionserfassungsvorrichtung (16, 36).

11. Die tragbare Vorrichtung (1) gemäß irgendeinem der vorhergehenden Ansprüche, wobei das dritte Gehäuse (30) ein zweites Betätigungsteil umfasst, und die zweite Position in einer Position ist, in der das zweite Betätigungsteil exponiert ist, um betreibbar zu sein.

## Revendications

1. Dispositif portable (1), comprenant :
- un premier boîtier (10) comprenant une première partie fonctionnelle (11) ;
- un deuxième boîtier (20) comprenant une partie d'affichage (21) ;
- un troisième boîtier (30) ; et
- un mécanisme d'articulation (12, 22, 32) qui relie le premier boîtier (10), le deuxième boîtier (20) et le troisième boîtier (30) respectivement, et relie le deuxième boîtier de manière mobile par rapport au premier boîtier à partir d'une première position dans laquelle un contour du deuxième boîtier est superposé sur le premier boîtier dans une deuxième position et une troisième position différente l'une de l'autre,
- dans lequel, dans la première position, le mécanisme d'articulation (12, 22, 32) relie solidairement le deuxième boîtier (20) de manière à pouvoir se superposer sur des contours du premier boîtier (10) et du troisième boîtier (30),
- et dans lequel, lorsque le deuxième boîtier (20) est déplacé dans la deuxième position à partir de la première position, le mécanisme d'articulation fait que le troisième boîtier (30) est exposé en limitant une quantité de mouvement du troisième boîtier accompagnant le mouvement du deuxième boîtier pour être zéro ou être inférieure à une quantité de mouvement du deuxième boîtier,
- et dans lequel, lorsque le deuxième boîtier (20) est déplacé dans la troisième position à partir de la première position, le mécanisme d'articulation (12, 22, 32) amène la première partie fonctionnelle (11) à être exposée dans un état fonctionnel en limitant la quantité de mouvement du troisième boîtier accompagnant le mouvement du deuxième boîtier pour être identique à celle du deuxième boîtier ou être inférieure à la quantité de mouvement du deuxième boîtier,
- **caractérisé en ce que** le mécanisme d'articulation (12, 22, 32) est constitué de telle sorte que soit le mouvement du deuxième boîtier (20) vers la deuxième position par rapport au premier boîtier, soit le mouvement du deuxième boîtier (20) vers la troisième position par rapport au premier boîtier, est un mouvement parallèle, et l'autre mouvement du deuxième boîtier par rapport au premier boîtier est un mouvement de rotation, et **en ce que**
- le mécanisme d'articulation (12, 22, 32) comprend :
- une clé (12) de forme parallélépipédique rectangulaire, qui est disposée sur le premier boîtier (10) ;
- un trou rond (32) pour une rotation dans lequel la clé (12) peut tourner et qui est disposé sur le troisième boîtier (30) ;
- une fente en forme de trou de clé (22) qui est formée sur une surface inférieure du deuxième boîtier (20), et formée en une forme constituée d'une partie de trou rond dans laquelle la clé peut tourner et une partie de trou allongée ayant une largeur inférieure à un côté plus long de la clé, la clé (12) pouvant coulisser dans la partie de trou allongée ; et
- un capuchon anti-glissement (17) disposé sur le premier boîtier (10) et monté et fixé à la clé sur le premier boîtier (10) à travers le trou rond (32) et la fente en forme de trou de clé (22).

2. Dispositif portable (1) selon la revendication 1,
- dans lequel le mécanisme d'articulation (12, 22, 32) est constitué de sorte que lorsque le deuxième boîtier (20) se déplace dans la deuxième position à partir de la première position par rapport au premier boîtier (10), le deuxième boîtier effectue un mouvement parallèle,
- lorsque le deuxième boîtier se déplace dans la troisième position à partir de la première position par rapport au premier boîtier, le deuxième boîtier effectue un mouvement de rotation.

3. Dispositif portable (1) selon la revendication 2, comprenant en outre un mécanisme de limitation (38) limitant le mouvement du deuxième boîtier (20), dans lequel le mécanisme de limitation limite le mouvement du deuxième boîtier de manière à
- permettre un mouvement parallèle et un mouvement de rotation du deuxième boîtier dans la première position,
- permettre uniquement le mouvement parallèle du deuxième boîtier dans la deuxième position, et
- permettre uniquement le mouvement de rotation du deuxième boîtier dans la troisième position.

4. Dispositif portable (1) selon la revendication 1,
- dans lequel le mécanisme d'articulation (12, 22, 32) est constitué de sorte que
- lorsque le deuxième boîtier (20) se déplace dans la deuxième position à partir de la première position par rapport au premier boîtier (10), le deuxième boîtier exécute un mouvement de rotation, et,
- lorsque le deuxième boîtier se déplace dans la troisième position à partir de la première position par rapport au premier boîtier, le deuxième boîtier effectue un mouvement parallèle.

5. Dispositif portable (1) selon la revendication 3, dans lequel le mécanisme de limitation comprend des plaques de limitation (38) disposées des deux côtés du troisième boîtier (30), avec une hauteur plus courte qu'une épaisseur du deuxième boîtier (20).

6. Dispositif portable (1) selon la revendication 4, comprenant en outre un mécanisme de limitation (38) limitant le mouvement du deuxième boîtier (20),
- dans lequel le mécanisme de limitation (38) limite le mouvement du deuxième boîtier (20) de manière à
- permettre un mouvement parallèle et un mouvement de rotation du deuxième boîtier (20) dans la première position,
- ne permettent que le mouvement de rotation du deuxième boîtier (20) dans la deuxième position, et
- ne permettent le déplacement parallèle du deuxième boîtier (20) que dans la troisième position.

7. Dispositif portable (1) selon l'une quelconque des revendications précédentes, comprenant en outre :
- un mécanisme d'arrêt (13, 15, 23, 24, 33, 35, 37) arrêtant le deuxième boîtier (20) avec des forces de maintien prédéterminées respectivement dans la première position, la deuxième position et la troisième position.

8. Dispositif portable (1) selon la revendication 7, dans lequel
- le mécanisme d'arrêt (13, 15, 23, 24, 33, 35, 37) comprend :
- une première tige de blocage (13) disposée sur le premier boîtier (10) ;
- une deuxième tige de blocage (15) disposée sur le premier boîtier (10) ;
- une troisième tige de blocage (33) disposée sur le troisième boîtier (30) ;
- une quatrième tige de blocage (35) disposée sur le troisième boîtier (30) ;
- un premier trou rond (23) sur une surface inférieure du deuxième boîtier (20) ;
- un deuxième trou rond (24) sur la surface inférieure du deuxième boîtier (20) ; et
- un troisième trou rond (37) sur une surface inférieure du troisième boîtier (30), dans lequel :
- lorsque le troisième boîtier est superposé sur un contour du premier boîtier (10), la deuxième tige de blocage (15) sur le premier boîtier (10) s'adapte dans le troisième trou rond (37) sur le troisième boîtier (30) ;
- lorsque le deuxième boîtier (20) est superposé sur un contour du troisième boîtier (30), la troisième tige de blocage (33) s'adapte dans le premier trou rond (23) ;
- lorsque le deuxième boîtier (20) est glissé assez par rapport au premier boîtier (10) pour exposer le troisième boîtier (30), la quatrième tige de blocage (35) s'adapte dans le deuxième trou rond (24) ; et
- lorsque le deuxième boîtier (20) est tourné assez par rapport au premier boîtier (10) pour exposer la première partie fonctionnelle (11), la première tige de blocage (13) s'adapte dans le troisième trou rond (37).

9. Dispositif portable (1) selon l'une quelconque des revendications précédentes, comprenant en outre :
- un dispositif de détection de position (16, 36) capable de détecter dans quelle position parmi la première position, la deuxième position et la troisième position se trouve le dispositif portable ; et
- un dispositif de sélection de mode (109) sélectionnant un mode de fonctionnement utilisable parmi une pluralité de modes de fonctionnement,
- dans lequel le dispositif de sélection de mode (109) sélectionne automatiquement un mode de fonctionnement utilisable parmi la pluralité de modes de fonctionnement sur la base d'un résultat de détection du dispositif de détection de position.

10. Dispositif portable (1) selon la revendication 8, comprenant en outre :
- un premier commutateur de détection (16) qui détecte si la première tige de blocage (13) est compressée par une surface inférieure du troisième boîtier (30) ;
- un second commutateur de détection (36) qui détecte si la quatrième tige de blocage (35) est compressée par la surface inférieure du deuxième boîtier (20) ;
- un dispositif de détection de position (16, 36) capable de détecter dans quelle position parmi la première position, la deuxième position et la troisième position se trouve le dispositif portable (1), selon des états MARCHE/ARRET du premier commutateur de détection (16) et du second commutateur de détection (36) ; et
- un dispositif de sélection de mode (109) sélectionnant un mode de fonctionnement utilisable à partir d'une pluralité de modes de fonctionnement, selon un résultat de détection de position par le dispositif de détection de position (16, 36).

11. Dispositif portable (1) selon l'une quelconque des revendications précédentes, dans lequel
- le troisième boîtier (30) comprend une deuxième partie fonctionnelle, et
- la deuxième position est une position dans laquelle la deuxième partie fonctionnelle est exposée pour pouvoir être actionnée.
